# EUROPÄISCHE PATENTSCHRIFT

(11) **EP 3 683 467 B1**
(45) Veröffentlichungstag und Bekanntmachung des Hinweises auf die Patenterteilung: **14.07.2021**
(21) Anmeldenummer: 19152037.8
(22) Anmeldetag: 16.01.2019
(51) Int. Cl.: F16D 65/18, F16D 55/226

(54) **ZUSPANNEINRICHTUNG FÜR EINE SCHEIBENBREMSE VON NUTZFAHRZEUGEN UND EINE SCHEIBENBREMSE FÜR NUTZFAHRZEUGE**
ACTUATING DEVICE FOR A UTILITY VEHICLE DISC BRAKE AND A DISC BRAKE FOR A UTILITY VEHICLE
DISPOSITIF DE SERRAGE POUR UN FREIN À DISQUE DES VÉHICULES UTILITAIRES ET FREIN À DISQUE POUR VÉHICULES UTILITAIRES

(43) Veröffentlichungstag der Anmeldung: 22.07.2020
(73) Patentinhaber: ZF CV Systems Europe BV, 1170 Brussels (BE)
(72) Erfinder: HECKER, Jannis, 69121 Heidelberg (DE); SCHERER, Vitalij, 69181 Leimen (DE); JUNGMANN, Hans-Christian, 69517 Gorxheimertal (DE)
(74) Vertreter: Copi, Joachim

(56) Entgegenhaltungen:
- DE-U1- 9 410 455
- US-A- 5 538 109
- US-A1- 2001 047 913
- US-A1- 2011 233 013

## Beschreibung

Die Erfindung betrifft eine Zuspanneinrichtung für Scheibenbremsen von Nutzfahrzeugen und eine Scheibenbremse für Nutzfahrzeuge.

Im Nutzfahrzeugbereich sind Scheibenbremsen und deren Aufbau hinlänglich bekannt. Bevorzugt werden in der heutigen Zeit Gleitsattelscheibenbremsen eingesetzt. Während eines Bremsvorgangs wird eine Bremsscheibe der Scheibenbremse über eine Zuspannvorrichtung zugespannt. Eine über einen Bremszylinder bereitgestellte Kraft wird über einen in der Scheibenbremse angeordneten Drehhebel an die Zuspanneinrichtung übertragen. Eine in der Zuspanneinrichtung, axial in Richtung der Bremsscheibe, angeordnete Stellspindel überträgt die Zuspannkraft über ein Druckstück auf einen zuspannseitigen Bremsbelag, wobei der zuspannseitige Bremsbelag und der felgenseitige Bremsbelag die Bremsscheibe zuspannen. Die Scheibenbremse ist unterteilt in eine Felgenseite und in eine Zuspannseite. Unter einer Zuspannseite ist die Seite der Scheibenbremse definiert, an der die Bremsscheibe über eine Zuspanneinrichtung zugespannt wird. Als Felgenseite ist die in Richtung der Felge eines Fahrzeugs gerichtete Seite der Scheibenbremse definiert. Um zu vermeiden das Schmutz oder andere Umwelteinflüsse über einen Bremsscheibenschacht und eine an dem Bremssattel vorhandenen Öffnung für die Stellspindel in den Innenraum der Scheibenbremse gelangt, ist zwischen einem Druckteller der Stellspindel und der Öffnung für die Stellspindel ein Faltenbalg angeordnet. Der Faltenbalg verbindet den Druckteller der Stellspindel mit dem Bremssattel. Während eines Bremsvorgangs bewegt sich der Faltenbalg mit der Stellspindel axial in Richtung der Bremsscheibe oder nach einem Bremsvorgang axial entgegengesetzt der Bremsscheibe. Während eines Bremsvorgangs sind die Bremsbeläge mit der Bremsscheibe in Kontakt und erzeugen durch Reibung Wärme im Bereich des Faltenbalgs. Durch die Betätigung des Bremszylinders und der beim Bremsvorgang erzeugten Wärme, entsteht ein Überdruck im Bremssattel und in einer Zuspannbox, infolgedessen sich der Faltenbalg aufbläht, sich an der entgegengesetzt der Bremsscheibe aufweisenden Rückseite des Drucktellers anlegt und durch die hohen Temperaturen kleben bleibt. Die Zuspannbox umfasst eine Zuspanneinrichtung, eine Nachstelleinrichtung und ein Druckstück. Nach Abkühlung kommt es in dem Faltenbalg häufig zu Rissbildungen.

Die DE102007059777B4 löst das Problem des Aufblähens und des Ankleben des Faltenbalgs an dem Druckteller, indem der Faltenbalg aus einem Hochtemperatur-Material hergestellt ist. Allerdings hat sich gezeigt, dass das Hochtemperaturmaterial eine geringe Rissfestigkeit und eine geringe Lebensdauer aufweist. Zudem ist Hochtemperaturmaterial in der Anschaffung sehr kostenintensiv.

Die DE102008054162A1 offenbart beispielsweise ein als Isolierschild definiertes Hitzeschutzschild, das an dem Druckteller der Stellspindel vollständig oder zumindest weitgehend vollflächig anliegt. Nachteilig ist, dass die Wärme, ausgehend von der Bremsscheibe, direkt auf dem Hitzeschutzschild übertragen wird. Diese Hitzeschutzschilder bestehen auch aus einem Hochtemperatur-resistenten Material was zur Folge hat, dass der Hitzeschutzschild vorzeitig Risse bildet und der Hitzeschutzschild aus Sicherheitsgründen überdurchschnittlich oft ausgetauscht werden muss.

Die US 2011/233013 A1 offenbart wie der Stand der Technik zuvor ein Hitzeschutzschild aus nicht wärmleitenden Hochresistenten Materialien für Scheibenbremsen. Der Hitzeschild ist flexibel und zwischen einem Faltenbalg und über eine in einem Druckteller eingebrachte ringförmige Nut an dem Druckteller einer Stellspindel angeordnet. Zudem liegt der Hitzeschild nicht vollflächig an dem Druckteller an und verhindert somit ein Ankleben des Faltenbalgs an dem Druckteller.

Aufgabe der Erfindung ist es, ein Hitzeschutzschild für eine Zuspanneinrichtung und eine Scheibenbremse für Nutzfahrzeuge bereit zu stellen, welche die Nachteile aus dem zuvor genannten Stand der Technik überwindet.

Die Aufgabe wird dadurch gelöst, dass in einer Zuspanneinrichtung einer Scheibenbremse zwischen einem Drucktellerkopf, einer Stellspindel und einem Faltenbalg ein Hitzeschutzschild angeordnet ist, wobei der Hitzeschutzschild mit einem Abstand X zwischen dem Drucktellerkopf und dem Hitzeschutzschild angeordnet ist. Der Hitzeschutzschild ist nicht vollflächig an der Rückseite des Drucktellers angeordnet. Mit anderen Worten ist der Hitzeschutzschild nicht vollflächig an der der Bremsscheibe abgewandten Seite eines Drucktellers, angeordnet. Der Abstand zu dem Hitzeschutzschild verhindert ein Ankleben des Hitzeschutzschildes an dem Drucktellerkopf. Das heißt, dass mit dem Abstand der Wärmeübergang der Bremsscheibe zwischen dem Druckteller und dem Hitzeschutzschild unterbrochen wird. Ein weiterer Vorteil des Abstandes zwischen dem Hitzeschutzschild und dem Druckteller ist, dass auf Hochtemperatur-Material für das Hitzeschutzschild verzichtet werden kann.

Es hat sich weiterhin als Vorteil erwiesen, dass die Zuspanneinrichtung zwischen dem Druckteller und dem Hitzeschutzschild eine isolierende Schicht aufweist. Die isolierende Schicht unterbricht den Wärmeübergang, ausgehend von der Bremsscheibe in Richtung des Faltenbalgs, weshalb sich die von der Bremsscheibe abgewandte Seite des Hitzeschutzschilds abkühlt und die Oberflächentemperatur an dem Hitzeschutzschild niedriger ist, als die Oberflächentemperatur an dem Hitzeschutzschild ohne einer Isolationsschicht.

Erfindungsgemäß ist der Hitzeschutzschild ein mit einem Elastomer ummantelter Metallring oder ein mit einem Elastomer beschichteter Metallring. Die Basis des Hitzeschutzschildes bildet ein aus Metall geformter Ring. Es sind aber auch andere Materialien, wie Kunststoffe oder Verbundwerkstoffe denkbar. Der Metallring stabilisiert den Hitzeschutzschild und hält den Hitzeschutzschild an der Stellspindel in Position. Zusätzlich ummantelt ein Elastomer den Metallring. Denkbar sind auch Polymere, die den Metallring ummanteln. Das Elastomer absorbiert die abstrahlende Wärme von der Bremsscheibe und schützt den Faltenbalg vor einem Verkleben oder anders ausgedrückt, vor einem Verschweißen des Metallrings mit dem Druckteller durch die abstrahlende Wärme der Bremsscheibe. Es ist auch denkbar das Elastomer auf den Metallring aufzusprühen. Der Hitzeschutzschild hat die Aufgabe den Faltenbalg gegen ein Ankleben an dem Druckteller der Stellspindel zu schützen.

Der Metallring ist in einer weiteren Ausgestaltung nur einseitig mit dem Elastomer beschichtet um Kosten zu reduzieren. Bei einer einseitigen Beschichtung des Metallrings ist die dem Faltenbalg zugewandte Seite des Metallrings zu beschichten, damit der Faltenbalg nicht an dem Metallring anklebt und nach einer Abkühlung des Metallrings Risse bildet.

In einer weiteren Ausgestaltung ist der Metallring einseitig, mit der dem Faltenbalg abgewandten Seite des Metallrings, mit dem Elastomer beschichtet, damit die Temperatur des Hitzeschutzschildes niedriger gehalten wird.

Nicht beansprucht in einer Ausgestaltung der Hitzeschutzschild aus Kunststoff oder Silikon gebildet. Sowohl der Ring zur Formgebung und Stabilität des Hitzeschutzschildes, als auch die Ummantelung oder die Beschichtung sind vollständig aus Kunststoff oder aus Silikon. Es ist denkbar, den Hitzeschutzschild aus einem einzigen Kunststoff oder aus mehreren Kunststoffen herzustellen.

Weiterhin hat sich gezeigt, dass der Hitzeschutzschild vorteilhaft an dem Druckteller oder dem Drucktellerkopf mit einer Anordnung, umfassend Presssitz oder frei Position, angeordnet ist. Als Presssitz ist die Verbindung des Hitzeschutzschildes mit dem Druckteller definiert, bei der nach der Anordnung des Hitzeschutzschildes an dem Druckteller eine Presspassung entsteht und Längs-sowie Querkräfte kraftschlüssig übertragen werden. Der Hitzeschutzschild kann sich nicht mehr axial entlang der Stellspindel bewegen. In der zweiten denkbaren Anordnung "frei Position" kann sich der Hitzeschild axial entlang des Drucktellers nahezu frei bewegen bzw. der Hitzeschild hat vorzugsweise ein axiales Spiel von 0,1 mm bis 3 mm, weiter bevorzugt von 0,1 mm bis 1 mm. Der Hitzeschild ist lediglich durch den Abschlussbund des Faltenbalgs eingeschränkt.

Es hat sich in einer weiteren Ausführung als Vorteil erwiesen, dass die isolierende Schicht eine Luftschicht ist. Luft weist gegenüber anderen Stoffen, Stoffgemischen oder Festkörper einen sehr niedrigen Wärmeleitkoeffizient von 0,024 [W / (m * K)] auf. Durch den niedrigen Wärmeleitkoeffizient der Luft wird die hohe Temperatur in der Scheibenbremse, gebildet durch die abgestrahlte Wärme der Bremsscheibe, bereits vor Erreichen des Hitzeschutzschildes deutlich gesenkt.

Der Hitzeschutzschild ist in einer weiteren Ausführung als O-Ring ausgebildet. Sowohl der Druckteller, als auch der Faltenbalg weisen eine kreisförmige Geometrie auf, sodass der Hitzeschutzschild den Faltenbalg vollflächig oder zumindest teilweise gegen ein Ankleben an dem Drucktellerkopf überdeckt. Weiterhin kann der als O-Ring ausgebildete Hitzeschutzschild am Drucktellerkopf zentriert, bzw. positioniert werden. Insbesondere ist der Abstand zwischen dem Drucktellerkopf und dem Hitzeschutzschild in einer weiteren Ausführung größer gleich 1 mm. Der Abstand ist zur Anordnung oder zum Befüllen einer zusätzlichen Isolationsschicht erforderlich. Zudem verringert sich die Temperatur mit zunehmendem Abstand von der Bremsscheibe. Darüber hinaus kann in der Montage ab einem Abstand größer gleich 1 mm zwischen dem Drucktellerkopf und dem Hitzeschutzschild der Toleranzbereich eingehalten werden.

Es hat sich weiterhin gezeigt, dass der Hitzeschild, bezogen auf den Drucktellerkopf, in einer weiteren Ausgestaltung parallel oder schräg zwischen dem Drucktellerkopf und dem Faltenbalg angeordnet ist. Je nach Ausgestaltung des Drucktellers kann der Hitzeschutzschild schräg oder parallel zu dem Drucktellerkopf angeordnet werden, wodurch ein gleichmäßiger Abstand, daher eine gleichmäßige Isolierschicht, zwischen dem Hitzeschutzschild und dem Drucktellerkopf erzielt wird. Die gleichmäßige Isolierschicht weist den Vorteil auf, dass der Wärmeübergang an der gesamten Fläche oder zumindest überwiegend an der gesamten Fläche des Hitzeschutzschildes gleich hoch ist.

Zudem weist in einer weiteren Ausbildung der Hitzeschutzschild in Richtung des Drucktellerkopfes Zapfen oder Nuten auf.

Die Zapfen des Hitzeschutzschildes sind nach einer weiteren Ausgestaltung dazu ausgebildet in Nuten des Drucktellerkopfes zu greifen. Weiterhin können die Zapfen des Drucktellerkopfes in die Nuten des Hitzeschutzschildes greifen. Mit den Zapfen ist der Hitzeschutzschild zudem verdrehsicher mit dem Druckteller, insbesondere mit dem Drucktellerkopf, verbunden. Außerdem ist mit der Zapfenanordnung an dem Hitzeschutzschild ein gleichmäßiger Schutz des Faltenbalgs vor Hitzeeinwirkungen, ausgehend von der Bremsscheibe und den Bremsbelägen, vorhanden.

Es hat in einer weiteren Ausgestaltung vorgesehen, dass der Hitzeschutzschild mindestens 3 Zapfen und der Drucktellerkopf mindestens 3 Nuten aufweist. Die Zapfen des Hitzeschutzschildes und die Nuten des Drucktellerkopfes sind vorteilhaft geometrisch als Dreiecksform angeordnet und sichern den Hitzeschutzschild vor einer axialen Drehbewegung. Der Freiraum zwischen den Zapfen des Hitzeschutzschildes ermöglicht Luftbewegungen und / oder Konvektion, wodurch ein Wärmestau zwischen dem Drucktellerkopf und dem Hitzeschutzschild vermieden wird. Die axiale Drehbewegung des Hitzeschutzschildes muss nicht vollständig unterbunden werden. Das heißt, dass der Hitzeschutzschild ein axiales Spiel aufweisen kann, wobei die Nuten des Drucktellerkopfes in ihrer Abmessung größer sind als die Zapfen des Hitzeschutzschildes. Zudem sind die Nuten des Drucktellerkopfes und die Zapfen des Hitzeschutzschildes als Presssitz zur Positionierung des Hitzeschutzschildes an dem Drucktellerkopf ausgelegt.

Besonders vorteilhaft weist der Hitzeschutzschild in einer zweiten Ausführungsform 6 Zapfen und der Drucktellerkopf 6 Nuten auf. Mit der zweiten Ausführungsform ist ein besonders sicheres Abstützen des Hitzeschutzschildes an dem Drucktellerkopf möglich.

Zudem ist in einer weiteren Ausführungsform vorgesehen, dass ein umlaufender Zapfen an dem Hitzeschutzschild angeordnet ist und in eine umlaufende Nut des Drucktellerkopfes greift. Vorteile des umlaufenden Absatzes des Hitzeschutzschildes ergeben sich in der Montage, da der umlaufende Absatz des Drucktellerkopfes ohne weiteres verdrehen des Drucktellerkopfes in die umlaufende Nut des Drucktellerkopfes montiert werden kann.

Die Zapfen des Hitzeschutzschildes sind in einer weiteren Ausführung, bezogen auf eine Drucktellerachse, radial außen an dem Hitzeschutzschild angeordnet. Mit der Anordnung der Zapfen an dem äußeren Bereich des Hitzeschutzschildes lässt sich der Hitzeschutzschild einfach durch maschinelle Prozesse wie Stanz- und Umformprozesse oder durch Drehprozesse bearbeiten. Ein zusätzliches Anbringen der Zapfen an dem Hitzeschutzschild ist nicht erforderlich.

Darüber hinaus weist in einer weiteren Ausgestaltung der Hitzeschild in Richtung des Drucktellerkopfes Noppen auf. Die Noppen des Drucktellerkopfes dienen der Abstützung des Hitzeschutzschildes an dem Drucktellerkopf. Es ist auch denkbar, dass zur Abstützung des Hitzeschutzschildes an dem Drucktellerkopf, der Drucktellerkopf in Richtung des Hitzeschutzschildes Noppen aufweist. Die Noppen können in ihrer Geometrie unterschiedlich ausgestaltet sein und beispielsweise die Form eines Rechtecks, Quadrats, Dreiecks, Kreises aufweisen. Besonders vorteilhaft weist der Drucktellerkopf oder der Hitzeschutzschild eine gerade Anzahl an Noppen auf, damit der Drucktellerkopf gleichmäßig an dem Hitzeschutzschild oder der Hitzeschutzschild gleichmäßig an dem Drucktellerkopf anliegt.

In einer weiteren Ausführung sind die Noppen Bestandteile des Elastomers des Hitzeschutzschildes. Mit anderen Worten ausgedrückt, die Noppen sind aus dem Elastomer geformt. Die Noppen können aber auch an dem Elastomer angeformt sein.

Es hat sich weiterhin gezeigt, dass der Drucktellerkopf in einer weiteren Ausführung Abstützelemente in Richtung der Zuspannseite der Scheibenbremse aufweist. Die Abstützelemente sind geometrische Erhebungen, an denen sich der Hitzeschutzschild abstützt, wobei eine vollflächige Abstützung des Hitzeschutzschildes an dem Drucktellerkopf vermieden wird. Die Abstützelemente können in der Form variieren. Zusätzliche Kosten entstehen nicht, da die Abstützelemente gleichzeitig mit dem Druckteller oder dem Drucktellerkopf, während des Herstellungsprozesses, umfassend Stanzen oder Gießen, des Drucktellers oder nur des Drucktellerkopfes ausgebildet werden.

Darüber hinaus wird die Aufgabe in einer letzten vorteilhaften Ausführung durch eine Scheibenbremse für Kraftfahrzeuge gelöst, wobei die Scheibenbremse eine Zuspanneinrichtung nach einem der vorangegangenen Ausführungen aufweist.

Nachfolgend werden ausgewählte Ausführungsbeispiele der Erfindung anhand der beigefügten Figuren erläutert.

Es zeigt:
Fig. 1 eine Scheibenbremse in einer seitlich geschnittenen Ansicht mit einer erfindungsgemäßen Zuspanneinrichtung,
Fig. 2 einen Teilausschnitt der Zuspanneinrichtung mit einem Hitzeschutzschild,
Fig.2a eine Detailansicht des Hitzeschutzschildes im eingebauten Zustand mit einem einseitig beschichteten Hitzeschild,
Fig. 3 ein Hitzeschutzschild in einer seitlich gedrehten Ansicht,
Fig. 3a eine geschnittene Ansicht des Hitzeschutzschildes im Querschnitt,
Fig.3b eine Detailansicht des geschnittenen Hitzeschutzschildes nach Fig. 3a,
Fig. 4 eine seitlich gedrehte Ansicht des Druckstücks und einem Hitzeschutzschild mit Zapfen,
Fig. 5 eine geschnittene Teilansicht einer Zuspanneinrichtung mit einem Hitzeschutzschild mit Zapfen,
Fig. 6 ein Zapfen aufweisendes Hitzeschutzschild in einer seitlich gedrehten Frontalansicht,
Fig. 6a ein Zapfen aufweisendes Hitzeschutzschild in einer seitlich gedrehten Rückansicht.
Fig. 7 ein Hitzeschutzschild mit Noppen,
Fig. 7a einen Druckteller mit einem Hitzeschutzschild nach Fig. 7 im eingebauten Zustand,
Fig. 8 einen Druckteller mit einer umlaufenden Nut im Drucktellerkopf und ein Hitzeschutzschild mit einem umlaufenden Absatz,
Fig. 8a einen Druckteller mit einem Drucktellerkopf nach Fig. 8 im Detail,
Fig. 9 einen Druckteller mit Abstützelementen am Drucktellerkopf,
Fig. 9a einen Druckteller mit Abstützelementen nach Fig. 9 im Detail.

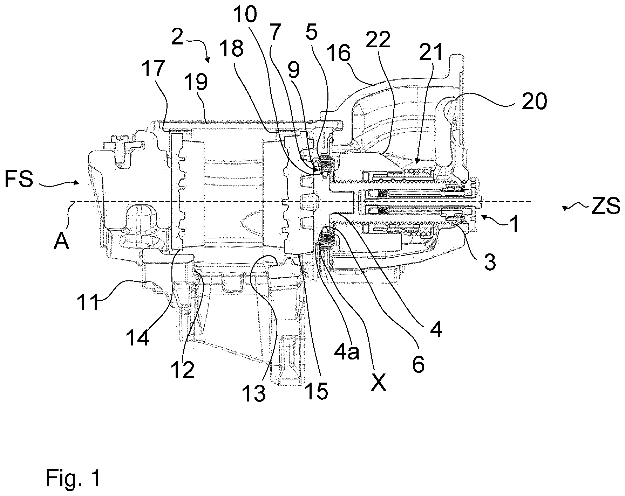

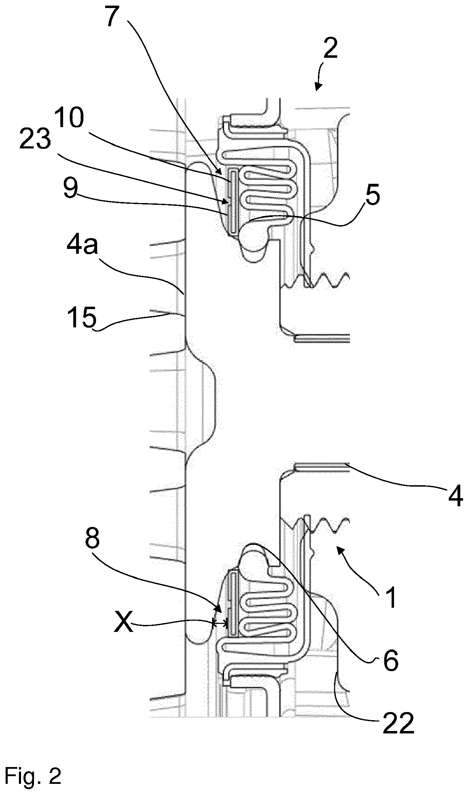

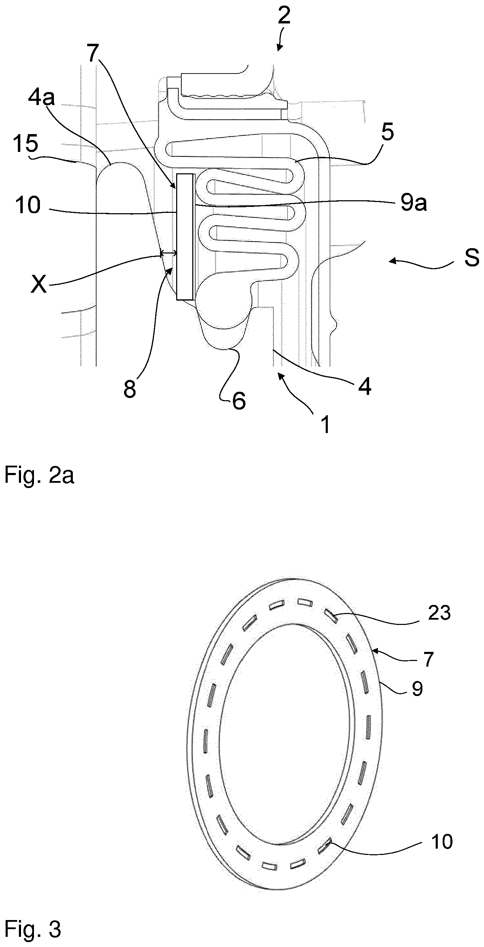

Fig.1 zeigt eine seitlich geschnittene Ansicht einer Scheibenbremse 2 mit einer Zuspanneinrichtung 1. Die Scheibenbremse 2 weist eine Zuspannseite ZS und eine Felgenseite FS auf. Ein Bremsträger 11 weist an der Felgenseite FS einen Belagträgerschacht 12 zur Aufnahme eines Bremsbelags 14 und an der Zuspannseite ZS einen Belagträgerschacht 13 zur Aufnahme eines Bremsbelags 15 auf. Niederhaltefedern 17, 18 und ein Belaghaltebügel 19 sichern die Bremsbeläge 14, 15 gegen ein radiales Herausfallen aus den Bremsbelagträgerschächten 12, 13. Die Zuspanneinrichtung 1 weist einen Drehhebel 20 auf, der während eines Zuspannvorgangs eine mit einem Druckteller 4 aufweisende Stellspindel 3 axial, entlang einer axialen Achse A, in Richtung der Bremsbeläge 14, 15 verschiebt, wodurch die Bremsbeläge 14, 15 gegen eine nicht gezeigte Bremsscheibe gedrückt werden. Der Druckteller 4 weist eine umlaufende Nut 6 auf, in der ein Faltenbalg 5 angeordnet ist. Der Faltenbalg 5 ist durch einen Deckel zusätzlich mit einem Bremssattel 16 verbunden und schützt die Zuspanneinrichtung 1 gegen Umwelteinflüsse wie Staub, Sand, Steine oder Schnee. Zwischen dem Faltenbalg 5 und einem Drucktellerkopf 4a des Drucktellers 4 ist ein Hitzeschutzschild 7 angeordnet. Der Hitzeschutzschild 7 schützt den Faltenbalg 5 während des Rückstellvorgangs vor einem Ankleben an dem Drucktellerkopf 4a und während eines Zustellvorgangs gegen ein Abreißen von dem Drucktellerkopf 4a, also einer Beschädigung des Faltenbalgs 5. Der Hitzeschutzschild 7 besteht aus einem Metallring 10 und einem Elastomer 9. In Fig. 1 ist der Hitzeschutzschild 7 mittels eines Pressverfahrens fest an dem Druckteller 4 angeordnet. Als zusätzliche Isolierung weist die Zuspanneinrichtung 1 zwischen dem Drucktellerkopf 4a und dem Hitzeschutzschild 7 eine aus Luft bestehende isolierende Schicht 8 (s. Fig. 2 und 2a) auf. Das heißt, der Hitzeschutzschild 7 ist nicht direkt an dem Drucktellerkopf 4a, sondern mit einem Abstand X von etwa 1 mm an dem Drucktellerkopf 4a angeordnet. Abschließend weist die Scheibenbremse 2 in dem Bremssattel 16 eine Nachstelleinrichtung 21 und ein Druckstück 22 zur Einstellung des Lüftspiels zwischen der Bremsscheibe und den Bremsbelägen 14, 15 auf. Als Lüftspiel ist der Abstand zwischen einem Bremsbelag 14, 15 und der Bremsscheibe definiert.

Fig. 2 verdeutlicht die Positionierung des Hitzeschutzschildes 7 zwischen dem Drucktellerkopf 4a und dem Faltenbalg 5 in einer Detailansicht der Zuspanneinrichtung 1 der Scheibenbremse 2 nach Fig. 1. Entgegen Fig. 1 ist der Hitzeschutzschild 7 frei an dem Druckteller 4 angeordnet und mit einem Elastomer 9 beschichtet. Mit anderen Worten ausgedrückt, der Hitzeschutzschild 7 liegt ohne ein Pressverfahren mit einem Spiel an dem Drucktellerkopf 4a an. Deutlich erkennbar ist der Abstand X von etwa 1 mm zwischen dem Drucktellerkopf 4a und dem Hitzeschutzschild 7. Der zusätzliche Abstand X zwischen dem Drucktellerkopf 4a und dem Hitzeschutzschild 7 senkt die Temperatur der abstrahlenden Wärme, welche bei einem Bremsvorgang durch Anlegen der Bremsbeläge 14, 15 an die Bremsscheibe entsteht. Der Faltenbalg 5 ist, zusätzlich zu dem Hitzeschild 7, durch die isolierende Schicht 8 aus Luft gegen zu hohen Temperaturen geschützt. Zu hohe Temperaturen führen zum Beispiel zu einem Ankleben des Faltenbalgs 5 an dem Druckteller 4, Drucktellerkopf 4a oder an dem Hitzeschutzschild 7. Das Elastomer 9 des Hitzeschutzschildes 7 ist ein zusätzlicher Schutz und vermeidet ein Ankleben des Metallrings 10 des Hitzeschutzschildes 7 an dem Faltenbalg 5. Das Elastomer 9 des Hitzeschutzschildes 7 weist darüber hinaus Öffnungen 23 auf. Die Öffnungen 23 dienen als Werkzeugauflagen bei der Ummantelung des Metallrings 10.

Eine weitere Ausführung des Hitzeschutzschildes 7 nach Fig. 1 bis 2 zeigt Fig. 2a. Der Hitzeschutzschild 7 weist allerdings nur an einer dem Faltenbalg 5 zugewandten Seite S des Metallrings 10 ein Elastomer 9a auf. Das heißt, das Elastomer 9a des Hitzeschutzschildes 7 ummantelt nicht den Metallring10 des Hitzeschutzschildes 7, sondern der Metallring 10 des Hitzeschutzschildes 7 ist an der dem Faltenbalg 5 zugewandten Seite S mit dem Elastomer 9a des Hitzeschutzschildes 7 beschichtet.

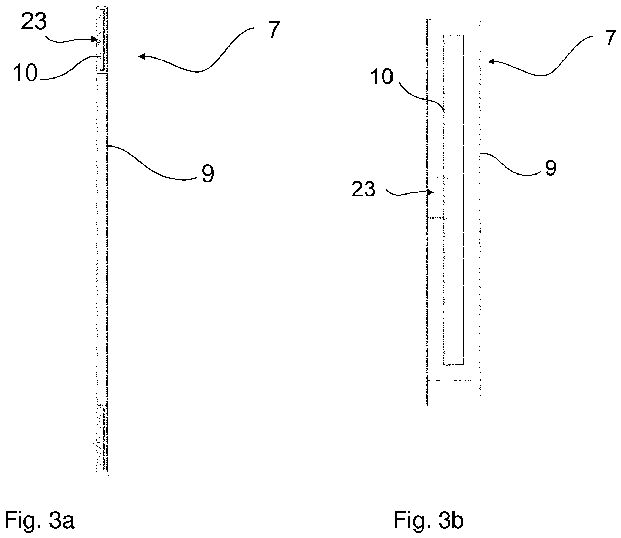

In Fig. 3 ist der Hitzeschutzschild 7 nach den Fig. 1 bis 2 im Detail gezeigt. Gut erkennbar ist die Ausgestaltung des Hitzeschutzschildes 7 als O-Ring. Zudem sind die Öffnungen 23 des Elastomers 9 sichtbar. Die Öffnungen 23 sind in dem Ausführungsbeispiel nur einseitig in das Elastomer 9 eingebracht. Wenn das Hitzeschutzschild 7 in die Scheibenbremse 2 nach Fig. 1 bis 2a verbaut ist, zeigen die Öffnungen 23 in Richtung der Felgenseite FS.

Fig. 3a zeigt den Hitzeschutzschild 7 nach Fig. 1, Fig. 2 und Fig. 3 im Querschnitt. Insbesondere ist im Detail die Vollummantelung des Metallrings 10 des Hitzeschutzschildes 7 mit dem Elastomer 9 des Hitzeschutzschildes 7 erkennbar.

Fig. 3b zeigt eine letzte Detailansicht des Hitzeschutzschildes 7 nach Fig. 1, Fig. 2, Fig. 3 und Fig. 3a im Querschnitt.

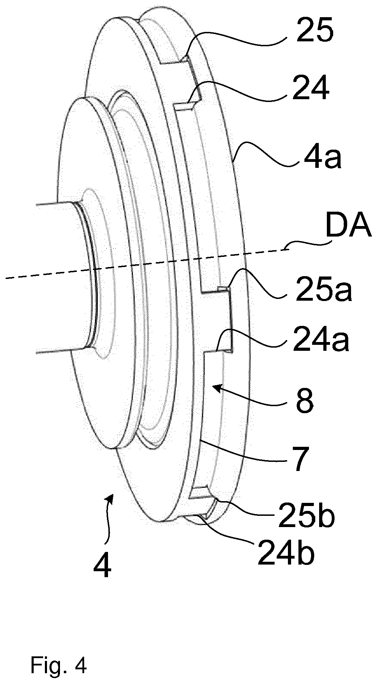

Fig. 4 zeigt eine zweite Ausführungsform des Hitzeschutzschildes 7 an dem Druckteller 4, wobei der Faltenbalg 5 für eine bessere Draufsicht auf dem Hitzeschutzschild 7 nicht gezeigt ist. Der Hitzeschutzschild 7 weist axial einer Drucktellerachse DA, in Richtung des Drucktellerkopfes 4a, Zapfen 24, 24a, 24b auf. Die Zapfen 24, 24a, 24b greifen in Nuten 25, 25a, 25b des Drucktellerkopfes 4a. Zwischen dem Hitzeschutzschild 7 und dem Drucktellerkopf 4a befindet sich Luft als isolierende Schicht 8. Der Hitzeschutzschild 7 ist, bezogen auf den Drucktellerkopf 4a, parallel zu dem Drucktellerkopf 4a angeordnet.

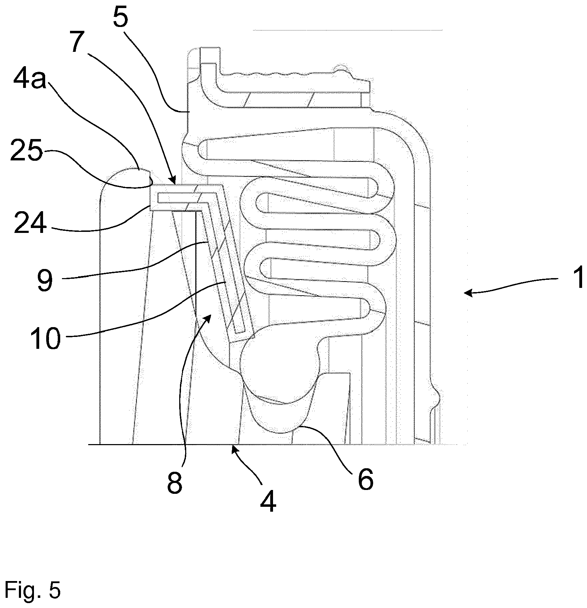

Fig. 5 zeigt eine Zuspanneinrichtung 1 nach Fig. 1 bis 2 mit einem Hitzeschutzschild 7 nach Fig. 4. Besonders gut zu erkennen ist die, bezogen auf den Drucktellerkopf 4a, parallele Anordnung des Hitzeschutzschildes 7. Der Hitzeschutzschild 7 ist zwischen dem Faltenbalg 5 und dem Drucktellerkopf 4a angeordnet. Insbesondere ist im Detail der Eingriff des Zapfens 24 des Hitzeschutzschildes 7 in die Nut 25 des Drucktellerkopfes 4a gezeigt. Der Hitzeschutzschild 7 ist in der Ausführung nach Fig. 5 ein mit dem Elastomer 9 ummantelter Metallring 10.

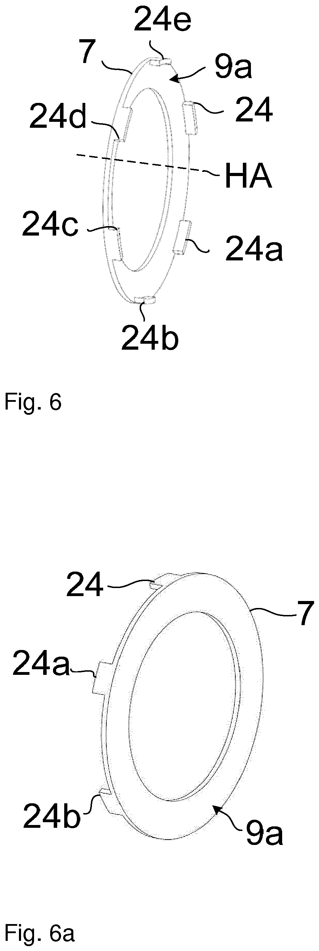

In Fig. 6 ist der Hitzeschutzschild 7 nach Fig. 4 und 5 im Detail gezeigt. Der Hitzeschutzschild 7 weist 6 Zapfen 24, 24a, 24b, 24c, 24d, 24e auf, die axial einer Achse HA des Hitzeschutzschildes 7 an dem äußeren Rand des Hitzeschutzschildes 7 angeordnet sind. Zudem weist das Hitzeschutzschild 7 an der Seite, an der die Zapfen 24, 24a, 24b, 24c, 24d, 24e angeordnet sind, eine Beschichtung mit einem Elastomer 9a auf.

Fig. 6a zeigt den Hitzeschutzschild 7 nach Fig. 4 bis 6 von der Rückseite. In dem Ausführungsbeispiel weist die Rückseite, also der gegenüberliegenden Seite an der die Zapfen 24, 24a, 24b, 24c, 24d, 24e angeordnet sind, eine Beschichtung mit einem Elastomer 9a auf.

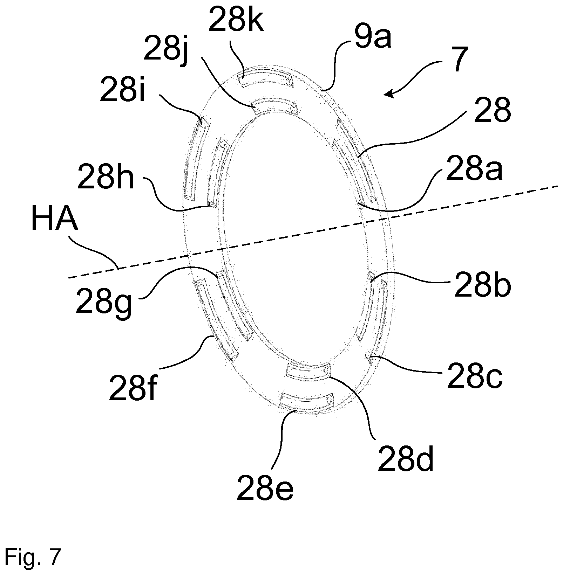

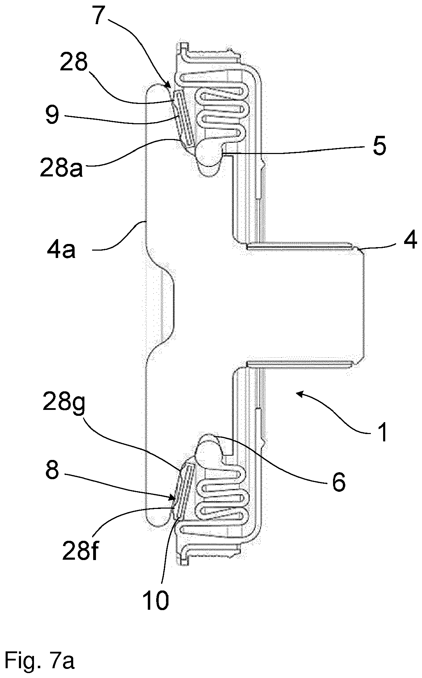

Fig. 7 zeigt eine dritte Ausführungsform des Hitzeschutzschildes 7 nach Fig.1 und Fig. 2. In der dritten Ausführungsform weist der Hitzeschutzschild 7 Noppen 28, 28a, 28b, 28c, 28d, 28e, 28f, 28g, 28h, 28i, 28j, 28k zum Abstützen des Hitzeschutzschildes 7 an dem Drucktellerkopf 4a auf. Die Noppen 28, 28a, 28b, 28c, 28d, 28e, 28f, 28g, 28h, 28i, 28j, 28k weisen eine Rechteckform auf und sind aus dem Elastomer 9 geformt. Zudem sind die Noppen 28, 28a, 28b, 28c, 28d, 28e, 28f, 28g, 28h, 28i, 28j, 28k kreisförmig auf dem Elastomer 9 angeordnet. Je zwei Noppen 28, 28a, 28b, 28c, 28d, 28e, 28f, 28g, 28h, 28i, 28j, 28k. sind radial der Achse HA des Hitzeschutzschildes 7 übereinander angeordnet.

Fig. 7a zeigt eine Zuspanneinrichtung 1 nach Fig. 1 und Fig. 2 mit einem Hitzeschutzschild nach Fig. 7. Das Hitzeschutzschild 7 stützt sich teilweise mit den Noppen 28, 28a, 28g, 28f an dem Drucktellerkopf 4a ab. Zwischen den Noppen 28, 28a, 28g, 28f des Hitzeschutzschildes 7 und dem Drucktellerkopf 4a ist eine isolierende Schicht 8 aus Luft angeordnet.

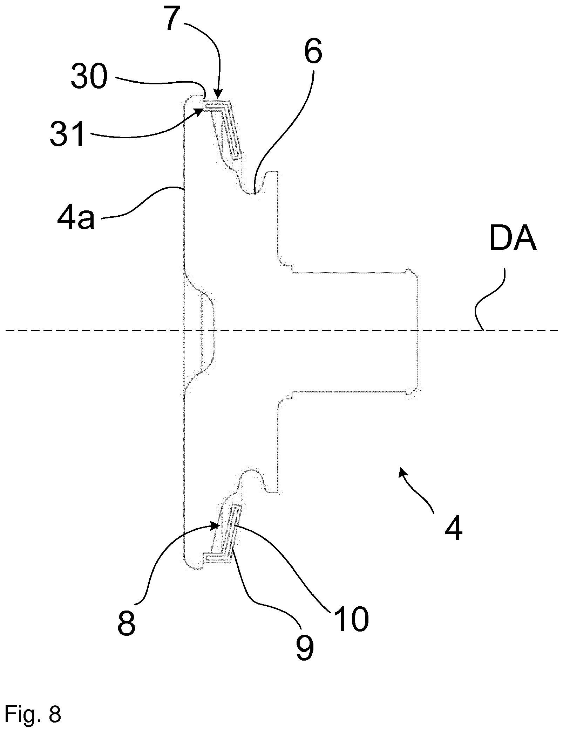

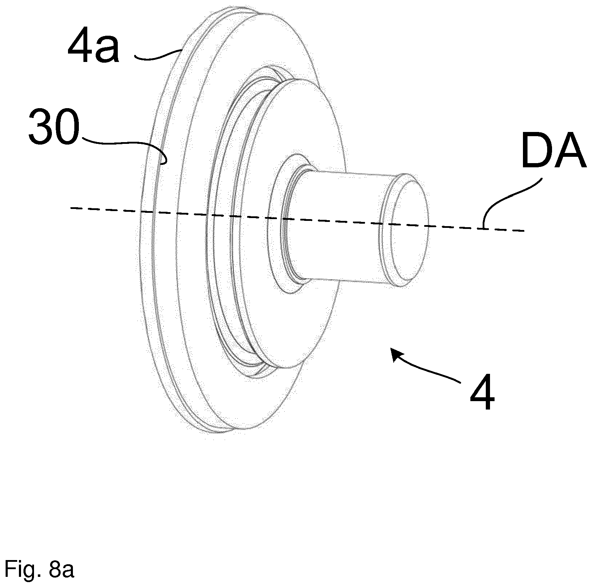

Fig. 8 zeigt ein weiteres Ausführungsbeispiel zur Anordnung des Hitzeschutzschildes 7 am Drucktellerkopf 4a der Zuspanneinrichtung 1 gemäß Fig. 1 und Fig. 2. Der Hitzeschutzschild 7 weist radial am äußeren Ende des Hitzeschutzschildes 7 einen umlaufenden Absatz 31 auf. Der umlaufende Absatz 31 des Hitzeschutzschildes 7 entsteht durch eine maschinelle Verformung des Hitzeschutzschildes 7. Im Querschnitt entspricht der Hitzeschutzschild 7 mit dem umlaufenden Absatz 31 einer L-Form. Radial am äußeren Rand des Drucktellerkopfes 4a ist eine umlaufende Nut 30 mittels Pressverfahren eingelassen. Der Hitzeschutzschild 7 stützt sich mit dem umlaufenden Absatz 31 in der umlaufenden Nut 30 des Drucktellerkopfes 4a ab. Die dem umlaufenden Absatz 31 des Hitzeschutzschildes 7 gegenüberliegende Seite des Hitzeschutzschildes 7 stützt sich an dem Faltenbalg 5 (s. Fig. 5) ab.

Fig. 8a zeigt noch einmal die umlaufende Nut 30 des Drucktellerkopfes 4a des Drucktellers 4 nach Fig. 1 und Fig. 2 im Detail.

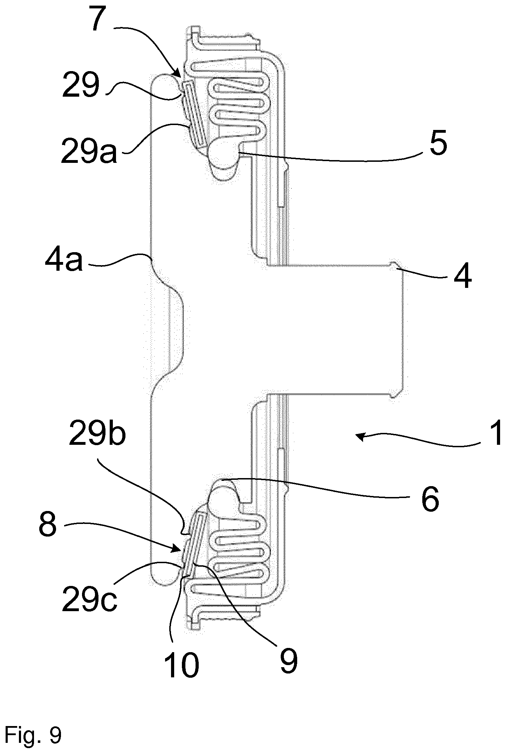

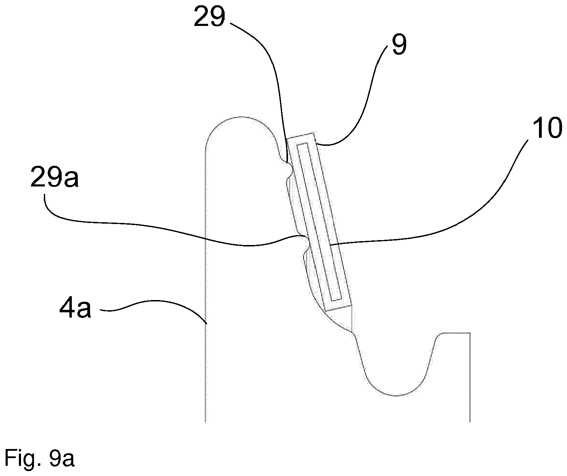

In Fig. 9 ist eine weitere Ausgestaltung der Zuspanneinrichtung 1 mit einem Hitzeschutzschild 7 nach Fig. 1 und Fig. 2 gezeigt. An dem Drucktellerkopf 4a sind in Richtung des Hitzeschutzschildes 7 Abstützelemente 29, 29a, 29b, 29c angeordnet. Die Abstützelemente 29, 29a, 29b, 29c weisen die gleiche Wirkung auf, wie die Noppen 28, 28a, 28b, 28c, 28d, 28e, 28f, 28g, 28h, 28i, 28j, 28k des Hitzeschutzschildes gemäß Fig. 7 und Fig. 7a. Zwischen den Abstützelementen 29, 29a, 29b, 29c ist Luft als isolierende Schicht 8 gegen ein Ankleben des Hitzeschutzschildes 7 an dem Drucktellerkopf 4a enthalten.

Fig. 9a zeigt noch einmal den Drucktellerkopf 4a mit den Abstützelementen 29, 29a, 29b, 29c gemäß Fig. 9 im Detail.

### Bezugszeichenliste als Teil der Beschreibung

- 1: Zuspanneinrichtung
- 2: Scheibenbremse
- 3: Stellspindel
- 4: Druckteller
- 4a: Drucktellerkopf
- 5: Faltenbalg
- 6: umlaufende Nut des Drucktellers 4
- 7: Hitzeschutzschild
- 8: isolierende Schicht
- 9, 9a: Elastomer des Hitzeschutzschildes 7
- 10: Metallring des Hitzeschutzschildes 7
- 11: Bremsträger
- 12-13: Belagträgerschacht
- 14-15: Bremsbelag
- 16: Bremssattel
- 17, 18: Niederhaltefeder
- 19: Belaghaltebügel
- 20: Drehhebel
- 21: Nachstelleinrichtung
- 22: Druckstück
- 23: Öffnungen des Elastomers 9 des Hitzeschutzschildes 7
- 24-24e: Zapfen des Hitzeschutzschildes 7
- 25-25b: Nuten des Drucktellerkopfes 4a
- 28-28k: Noppen des Hitzeschutzschildes (7)
- 29-29c: Abstützelemente des Drucktellerkopfes (4a)
- 30: umlaufende Nut des Drucktellerkopfes (4a)
- 31: umlaufender Absatz des Hitzeschutzschildes (7)
- A: Axiale Achse der Zuspanneinrichtung 1
- DA: Drucktellerachse
- HA: Achse des Hitzeschutzschildes 7
- S: dem Faltenbalg zugewandte Seite des Metallrings 10
- X: Abstand zwischen Druckteller 4 und Hitzeschutzschild 7
- FS: Felgenseite
- ZS: Zuspannseite

## Patentansprüche

1. Zuspanneinrichtung (1) für eine Scheibenbremse (2) von Nutzfahrzeugen umfassend eine Stellspindel (3) mit einem axial an der Stellspindel (3) angeordneten Druckteller (4) mit einem Drucktellerkopf 4a und wobei der Druckteller (4) zur Aufnahme eines Faltenbalgs (5) radial eine umlaufende Nut (6) aufweist, wobei zwischen dem Drucktellerkopf (4a) und dem Faltenbalg (5) ein Hitzeschutzschild (7) zumindest teilweise mit einem Abstand (X) angeordnet ist **dadurch gekennzeichnet, dass** der Hitzeschutzschild (7) ein mit einem Elastomer (9) ummantelter Metallring (10) oder ein mit einem Elastomer (9a) beschichteter Metallring (10) ist.

2. Zuspanneinrichtung (1) nach Anspruch 1, **dadurch gekennzeichnet, dass** die Zuspanneinrichtung (1) zwischen dem Drucktellerkopf (4a) und dem Hitzeschutzschild (7) eine isolierende Schicht (8) aufweist.

3. Zuspanneinrichtung (1) nach Anspruch 1, **dadurch gekennzeichnet, dass** der Metallring (10) einseitig, mit der dem Faltenbalg (6) zugewandten Seite (S), mit einem Elastomer (9a) beschichtet ist.

4. Zuspanneinrichtung (1) nach Anspruch 1, **dadurch gekennzeichnet, dass** der Metallring (10) einseitig, mit der dem Faltenbalg (6) abgewandten Seite (S), mit einem Elastomer (9a) beschichtet ist.

5. Zuspanneinrichtung (1) nach einem der vorangegangenen Ansprüche, **dadurch gekennzeichnet, dass** der Hitzeschutzschild (7) an dem Druckteller (4) oder dem Drucktellerkopf (4a) mit einer Anordnung, umfassend Presssitz oder frei Position, angeordnet ist.

6. Zuspanneinrichtung (1) nach Anspruch 2, **dadurch gekennzeichnet, dass** die isolierende Schicht (8) eine Luftschicht ist.

7. Zuspanneinrichtung (1) nach einem der vorangegangenen Ansprüche, **dadurch gekennzeichnet, dass** der Hitzeschutzschild (7) die Form eines O-Rings aufweist.

8. Zuspanneinrichtung (1) nach einem der vorangegangenen Ansprüche, **dadurch gekennzeichnet, dass** der Hitzeschutzschild (7) zumindest teilweise mit einem Abstand (X) größer gleich 1 mm zwischen dem Drucktellerkopf (4a) und dem Hitzeschutzschild (7) angeordnet ist.

9. Zuspanneinrichtung (1) nach einem der vorangegangenen Ansprüche, **dadurch gekennzeichnet, dass** der Hitzeschutzschild (7), bezogen auf dem Drucktellerkopf (4a), parallel oder schräg zwischen dem Drucktellerkopf (4a) und dem Faltenbalg (5) angeordnet ist.

10. Zuspanneinrichtung (1) nach einem der vorangegangenen Ansprüche, **dadurch gekennzeichnet, dass** der Hitzeschutzschild (7) in Richtung des Drucktellerkopfes (4a) Zapfen (24, 24a, 24b, 24c, 24d, 24e) aufweist.

11. Zuspanneinrichtung (1) nach Anspruch 10, **dadurch gekennzeichnet, dass** der Drucktellerkopf (4a) Nuten (25, 25a, 25b) aufweist und die Nuten (25, 25a, 25b) dazu ausgebildet sind die Zapfen (24, 24a, 24b, 24c, 24d, 24e) des Hitzeschutzschildes (7) aufzunehmen.

12. Zuspanneinrichtung (1) nach Anspruch 11, **dadurch gekennzeichnet, dass** der Hitzeschutzschild (7) mindestens 3 Zapfen (24, 24a, 24b, 24c, 24d, 24e) und der Drucktellerkopf (4a) mindestens 3 Nuten (25, 25a, 25b) aufweist.

13. Zuspanneinrichtung (1) nach einem der vorangegangenen Ansprüche, **dadurch gekennzeichnet, dass** der Hitzeschutzschild (7) einen umlaufenden Absatz (31) aufweist und der Drucktellerkopf 4a eine umlaufende Nut (30) zur Aufnahme des umlaufenden Absatzes (31) aufweist.

14. Zuspanneinrichtung (1) nach einem der Ansprüche 10 bis 12, **dadurch gekennzeichnet, dass** die Zapfen (24, 24a, 24b, 24c, 24d, 24e) des Hitzeschutzschildes (7), bezogen auf eine Drucktellerachse (DA), radial außen an dem Hitzeschutzschild (7) angeordnet sind.

15. Zuspanneinrichtung (1) nach einem der vorangegangenen Ansprüche, **dadurch gekennzeichnet, dass** der Hitzeschutzschild (7), in Richtung des Drucktellerkopfes (4a), Noppen (28, 28a, 28b, 28c, 28d, 28e, 28f, 28g, 28h, 28i, 28j, 28k) zur Abstützung des Hitzeschutzschildes (7) an dem Drucktellerkopf (4a) aufweist.

16. Zuspanneinrichtung (1) nach Anspruch 15, **dadurch gekennzeichnet, dass** die Noppen (28, 28a, 28b, 28c, 28d, 28e, 28f, 28g, 28h, 28i, 28j, 28k) des Hitzeschutzschildes Bestandteile des Elastomers (9) sind.

17. Zuspanneinrichtung (1) nach einem der vorangegangenen Ansprüche, **dadurch gekennzeichnet, dass** der Drucktellerkopf (4a), in Richtung der Zuspannseite (ZS), Abstützelemente (29, 29a, 29b, 29c) zum Abstützen des Hitzeschutzschilds (7) aufweist.

18. Scheibenbremse (2) für Kraftfahrzeuge umfassend einen Bremsträger (11) mit zumindest einem, in einem Belagträgerschacht (12, 13) angeordneten Bremsbelag (14, 15), einen dem Bremsträger (11) umgreifenden Bremssattel (16) zum axialen Zuspannen zumindest eines Bremsbelags (13, 14) an eine Bremsscheibe, wobei eine an einer Zuspannseite (ZS) des Bremsensattels (16) angeordnete Zuspanneinrichtung (1) eine Bremsscheibe über den Bremsbelag (15) während eines Bremsvorgangs zuspannt, **dadurch gekennzeichnet, dass** die Zuspanneinrichtung (1) nach einem der Ansprüche 1 bis 17 ausgebildet ist.

## Claims

1. An actuating device (1) for a utility vehicle disc brake (2), the actuating device comprising an actuating spindle (3) with a pressure plate (4) with a pressure plate head (4a) axially arranged on the actuating spindle (3) and wherein the pressure plate (4) has a radial annular groove (6) for receiving a boot (5), wherein a heat shield (7) is at least partially disposed between the pressure plate head (4a) and the boot (5) at a spacing (X), **characterized in that** the heat shield (7) is a metal ring (10) encapsulated in an elastomer (9) or is a metal ring (10) coated with an elastomer (9a) .

2. The actuating device (1) according to claim 1, **characterized in that** the actuating device (1) comprises an insulating layer (8) between the pressure plate head (4a) and the heat shield (7).

3. The actuating device (1) according to claim 1, **characterized in that** the metal ring (10) is coated with an elastomer (9a) on one side (S) facing the boot (6).

4. The actuating device (1) according to claim 1, **characterized in that** the metal ring (10) is coated with an elastomer (9a) on one side (S) facing away from the boot (6).

5. The actuating device (1) according to any of the preceding claims, **characterized in that** the heat shield (7) is arranged on the pressure plate (4) or the pressure plate head (4a) with an arrangement comprising press fit or free position.

6. The actuating device (1) according to claim 2, **characterized in that** the insulating layer (8) is an air layer.

7. The actuating device (1) according to any of the preceding claims, **characterized in that** the heat shield (7) has the shape of an O-ring.

8. The actuating device (1) according to any of the preceding claims, **characterized in that** the heat shield (7) is arranged at least partially at a spacing (X) is greater than or equal to 1 mm between the pressure plate head (4a) and the heat shield (7).

9. The actuating device (1) according to any of the preceding claims, **characterized in that** the heat shield (7) is arranged between the pressure plate head (4a) and the boot (5) in parallel with or obliquely to the pressure plate head (4a).

10. The actuating device (1) according to any of the preceding claims, **characterized in that** the heat shield (7) comprises pins (24, 24a, 24b, 24c, 24d, 24e) extending in a direction toward the pressure plate head (4a).

11. The actuating device (1) according to claim 10, **characterized in that** the pressure plate head (4a) comprises grooves (25, 25a, 25b) and **in that** the grooves (25, 25a, 25b) are configured to receive the pins (24, 24a, 24b, 24c, 24d, 24e) of the heat shield (7).

12. The actuating device (1) according to claim 11, **characterized in that** the heat shield (7) has at least three pins (24, 24a, 24b, 24c, 24d, 24e), and the pressure plate head (4a) has at least three grooves (25, 25a, 25b).

13. The actuating device (1) according to any of the preceding claims, **characterized in that** the heat shield (7) has a circumferential shoulder (31), and the pressure plate head (4a) has an annular groove (30) for receiving the circumferential shoulder (31).

14. The actuating device (1) according to any claims 10 to 12, **characterized in that** the pins (24, 24a, 24b, 24c, 24d, 24e) of the heat shield (7) are arranged on the heat shield (7) radially on the outside, in relation to a pressure plate axis (DA).

15. The actuating device (1) according to any of the preceding claims, **characterized in that** the heat shield (7) comprises elevations (28, 28a, 28b, 28c, 28d, 28e, 28f, 28g, 28h, 28i, 28j, 28k) toward the pressure plate head (4a) for supporting the heat shield (7) on the pressure plate head (4a) .

16. The actuating device (1) according to claim 15, **characterized in that** the elevations (28, 28a, 28b, 28c, 28d, 28e, 28f, 28g, 28h, 28i, 28j, 28k) of the heat shield are constituent parts of the elastomer (9).

17. The actuating device (1) according to any of the preceding claims, **characterized in that** the pressure plate head (4a) comprises supporting elements (29, 29a, 29b, 29c) toward the brake application side (ZS) for supporting the heat shield (7).

18. A disc brake (2) for motor vehicles comprising a brake carrier (11) with at least one brake lining (14, 15) arranged in a lining carrier well (12, 13), a brake caliper (16) which engages around the brake carrier (11) for axially applying at least one brake lining (13, 14) to a brake disc, wherein an actuating device (1) arranged on a brake application side (ZS) of the brake caliper (16) actuates a brake disc via the brake lining (15) during a braking operation, **characterized in that** the actuating device (1) is configured according to any of claims 1 to 17.

## Revendications

1. Dispositif de serrage (1) pour un frein à disque (2) de véhicules utilitaires comprenant une broche de commande (3) avec une rondelle de pression (4) disposée axialement sur la broche de commande (3) avec une tête de rondelle de pression (4a) et dans lequel la rondelle de pression (4) présente radialement une rainure périphérique (6) pour la réception d'un soufflet (5), dans lequel un écran de protection thermique (7) est disposé au moins en partie avec une distance (X) entre la tête de rondelle de pression (4a) et le soufflet (5), **caractérisé en ce que** l'écran de protection thermique (7) est une bague métallique (10) enrobée d'un élastomère (9) ou une bague métallique (10) revêtue d'un élastomère (9a).

2. Dispositif de serrage (1) selon la revendication 1, **caractérisé en ce que** le dispositif de serrage (1) présente entre la tête de rondelle de pression (4a) et l'écran de protection thermique (7) une couche isolante (8).

3. Dispositif de serrage (1) selon la revendication 1, **caractérisé en ce que** la bague métallique (10) est revêtue d'un côté, avec le côté (S) tourné vers le soufflet (6), d'un élastomère (9a).

4. Dispositif de serrage (1) selon la revendication 1, **caractérisé en ce que** la bague métallique (10) est revêtue d'un côté, avec le côté (S) opposé au soufflet (6), d'un élastomère (9a).

5. Dispositif de serrage (1) selon l'une quelconque des revendications précédentes, **caractérisé en ce que** l'écran de protection thermique (7) est disposé sur la rondelle de pression (4) ou la tête de rondelle de pression (4a) avec une disposition, comprenant un ajustement serré ou une position libre.

6. Dispositif de serrage (1) selon la revendication 2, **caractérisé en ce que** la couche isolante (8) est une couche d'air.

7. Dispositif de serrage (1) selon l'une quelconque des revendications précédentes, **caractérisé en ce que** l'écran de protection thermique (7) présente la forme d'un joint torique.

8. Dispositif de serrage (1) selon l'une quelconque des revendications précédentes, **caractérisé en ce que** l'écran de protection thermique (7) est disposé au moins en partie avec une distance (X) supérieure ou égale à 1 mm entre la tête de rondelle de pression (4a) et l'écran de protection thermique (7) .

9. Dispositif de serrage (1) selon l'une quelconque des revendications précédentes, **caractérisé en ce que** l'écran de protection thermique (7), par rapport à la tête de rondelle de pression (4a), est disposé de manière parallèle ou inclinée entre la tête de rondelle de pression (4a) et le soufflet (5).

10. Dispositif de serrage (1) selon l'une quelconque des revendications précédentes, **caractérisé en ce que** l'écran de protection thermique (7) présente en direction de la tête de rondelle de pression (4a) des tourillons (24, 24a, 24b, 24c, 24d, 24e) .

11. Dispositif de serrage (1) selon la revendication 10, **caractérisé en ce que** la tête de rondelle de pression (4a) présente des rainures (25, 25a, 25b) et les rainures (25, 25a, 25b) sont réalisées pour recevoir les tourillons (24, 24a, 24b, 24c, 24d, 24e) de l'écran de protection thermique (7).

12. Dispositif de serrage (1) selon la revendication 11, **caractérisé en ce que** l'écran de protection thermique (7) présente au moins trois tourillons (24, 24a, 24b, 24c, 24d, 24e) et la tête de rondelle de pression (4a) au moins trois rainures (25, 25a, 25b).

13. Dispositif de serrage (1) selon l'une quelconque des revendications précédentes, **caractérisé en ce que** l'écran de protection thermique (7) présente un épaulement périphérique (31) et la tête de rondelle de pression (4a) présente une rainure périphérique (30) pour la réception de l'épaulement périphérique (31).

14. Dispositif de serrage (1) selon l'une quelconque des revendications 10 à 12, **caractérisé en ce que** les tourillons (24, 24a, 24b, 24c, 24d, 24e) de l'écran de protection thermique (7), par rapport à un axe de rondelle de pression (DA), sont disposés radialement à l'extérieur sur l'écran de protection thermique (7).

15. Dispositif de serrage (1) selon l'une quelconque des revendications précédentes, **caractérisé en ce que** l'écran de protection thermique (7), en direction de la tête de rondelle de pression (4a), présente des picots (28, 28a, 28b, 28c, 28d, 28e, 28f, 28g, 28h, 28i, 28j, 28k) pour le soutien de l'écran de protection thermique (7) sur la tête de rondelle de pression (4a).

16. Dispositif de serrage (1) selon la revendication 15, **caractérisé en ce que** les picots (28, 28a, 28b, 28c, 28d, 28e, 28f, 28g, 28h, 28i, 28j, 28k) de l'écran de protection thermique font partie de l'élastomère (9).

17. Dispositif de serrage (1) selon l'une quelconque des revendications précédentes, **caractérisé en ce que** la tête de rondelle de pression (4a), en direction du côté de serrage (ZS), présente des éléments d'appui (29, 29a, 29b, 29c) pour le soutien de l'écran de protection thermique (7).

18. Frein à disque (2) pour véhicules à moteur comprenant un support de frein (11) avec au moins une garniture de frein (14, 15) disposée dans un puits de support de garniture (12, 13), un étrier de frein (16) entourant le support de frein (11) pour le serrage axial d'au moins une garniture de frein (13, 14) sur un disque de frein, dans lequel un dispositif de serrage (1) disposé sur un côté de serrage (ZS) de l'étrier de frein (16) serre un disque de frein au-dessus de la garniture de frein (15) pendant un processus de freinage, **caractérisé en ce que** le dispositif de serrage (1) est réalisé selon l'une quelconque des revendications 1 à 17.
